# EUROPEAN PATENT SPECIFICATION

(11) **EP 2 421 066 B1**
(45) Date of publication and mention of the grant of the patent: **17.10.2012**
(21) Application number: 10173391.3
(22) Date of filing: 19.08.2010
(51) Int. Cl.: H01M 2/10, B65D 25/28, B65D 25/32, H01M 2/04

(54) **Accumulator cover with self locking handle mechanism**
Akkumulatordeckel mit Griffselbstverriegelungsmechanismus
Couvercle d'accumulateur avec mécanisme de verrouillage automatique pour une poignée

(43) Date of publication of application: 22.02.2012
(73) Proprietor: Alfa Kutu VE Plastik San. VE TIC., Ltd., Istanbul (TR)
(72) Inventor: Cinoglu, Ozer, Istanbul (TR)
(74) Representative: Sevinç, Erkan

(56) References cited:
- EP-A1- 0 210 317
- EP-A1- 0 798 792
- EP-A2- 1 164 647
- DK-B- 149 340
- GB-A- 1 086 656
- GB-A- 2 262 929

## Description

### Field of the Invention

The present invention relates to an upper cover of an accumulator of the type for starting motor vehicles. The invention particularly pertains to an accumulator cover structure having locking means suitable for locking a pivotally rotating carrier handle in its horizontally resting position.

### Background of the Invention

Starter accumulator batteries such as those typically used in automotive and marine applications are mostly provided with a handle in order to facilitate carrying of the accumulator assembly which is heavy and cumbersome for the users and technicians. In order to achieve a more comfortable electrical accumulator cover structure various improvements have been provided, for instance as disclosed in the U.S. Patent Nos. 5,637,420 and 6,153,331.

US 5,637,420 discloses a self-latching handle assembly for storage batteries including an integrally formed cam mechanism with the ends of the battery handle. The assembly generally enables locking of the battery handle to the battery housing while permitting said battery handle to be pivoted between the horizontal storage position and a vertical use position. The locking mechanism, however serves for hindering the handle to be detached from the battery housing and does not provide any technical effect for the problems, such as unwanted vibration in the horizontal resting position during operation of the motor vehicle.

US 6,153,331 discloses a battery to tray securement apparatus having plurality of ribs and recesses adapted to hold the battery handle. The recesses serve for holding the handle without movement in horizontal position. The assembly is, however practically hard to apply since numerous additional components such as aforementioned ribs and recesses increase the overall complexity and costs of the production. Those skilled people in the art would immediately appreciate that the assembly is also uncomfortable during use or storage because of the excessive side components.

Further assemblies having similar objects have also been identified in the U.S. Patent Nos. 6,022,638 and 6,117,588 which again fail to provide a comfortable and cost effective solution for minimizing vibration and unintended movement problems of the pivotal accumulator handles.

In order to solve the aforementioned problems, US 6,499,190 provides a handle for an accumulator battery wherein a number of nipples are provided on the accumulator cover surface so as to cooperate with corresponding cavities on the rotatable handle, for preventing unintended vibration. Those protruding nipples and corresponding cavities, however are tending to get worn and sinking their effect by time.

In light of the above background, despite the considerable effort in this area, there still exists a need for an accumulator covering assembly capable of satisfying the diverse criteria. The present invention solves the existing problems with a cover assembly as disclosed in claim 1.

### Objects of the Invention

One of the objects of the present invention is to provide an accumulator cover assembly adapted to operate with a pivotal carrier handle in a self locking manner in horizontal resting position;

Another object of the present invention is to provide an accumulator cover assembly having locking means for inhibiting unintended vibration of the carrier handle, wherein said locking means are substantially invisible to human eye and integrally moldable with the accumulator cover;

Another object of the present invention is to provide an accumulator cover assembly comprising a carrier handle that corresponds to the cover structure;

A further object of the present invention is to provide an accumulator cover assembly whose carrier handle can be self locked and unlocked by sliding movement in the horizontal direction;

A further object of the present invention is to provide an accumulator comprising the above mentioned covering assembly; and

Still a further object of the present invention is to provide novel methods for producing the cover assembly (10) and accumulator of the present invention.

Further objects and corresponding advantages of the present invention shall be apparent to those skilled in the art in light of the appended drawings and following description.

### Brief Description of the Drawings

The attached drawings are given solely for illustrating preferred embodiments of the invention, wherein;
Figure 1 is a perspective view of an accumulator cover assembly according to the present invention when a carrying handle is absent,
Figure 2 is a planar view of the accumulator cover assembly shown in Figure 1,
Figure 3 is a side view of the accumulator cover assembly shown in Figures 1 and 2,
Figure 4 shows a perspective view of an accumulator cover assembly according to the present invention wherein a pivotally rotatable carrying handle is attached to the cover body, and terminal lids are brought into a vertical position.
Figure 5 is a planar view of the accumulator cover assembly according to the present invention wherein handle itself is shown in a horizontally resting position whereas the terminal lids are opened so as to stand in an upright position.
Figure 6 shows a perspective view of an accumulator cover assembly according to the present invention wherein the pivotally rotatable carrying handle is allowed to rest on the cover surface in a locked position,
Figure 7 is a side view of the accumulator cover assembly shown in Figure 6,
Figure 8 shows a perspective view of the accumulator cover assembly according to the present invention wherein the carrier handle stands in a semi-rotated position,
Figure 9 is a side view of the accumulator cover assembly as shown in Figure 8,
Figure 10 is a carrier handle according to a preferred embodiment of the present invention wherein one of the terminal lids stands in a half-opened position,
Figure 11 is a planar view of the carrier handle as shown in Figure 10, wherein both of the terminal lids stay in an opened position, and
Figure 12 is a perspective view of the carrier handle according to a preferred embodiment of the present invention wherein one of the terminal lids is absent and the other is being in half-opened position.

### Detailed Description of the Invention

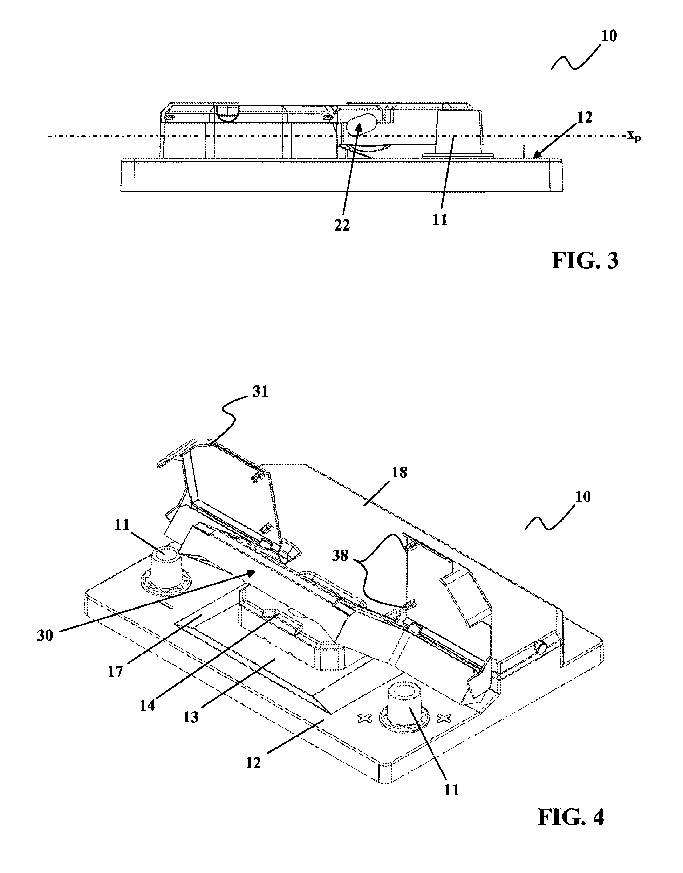

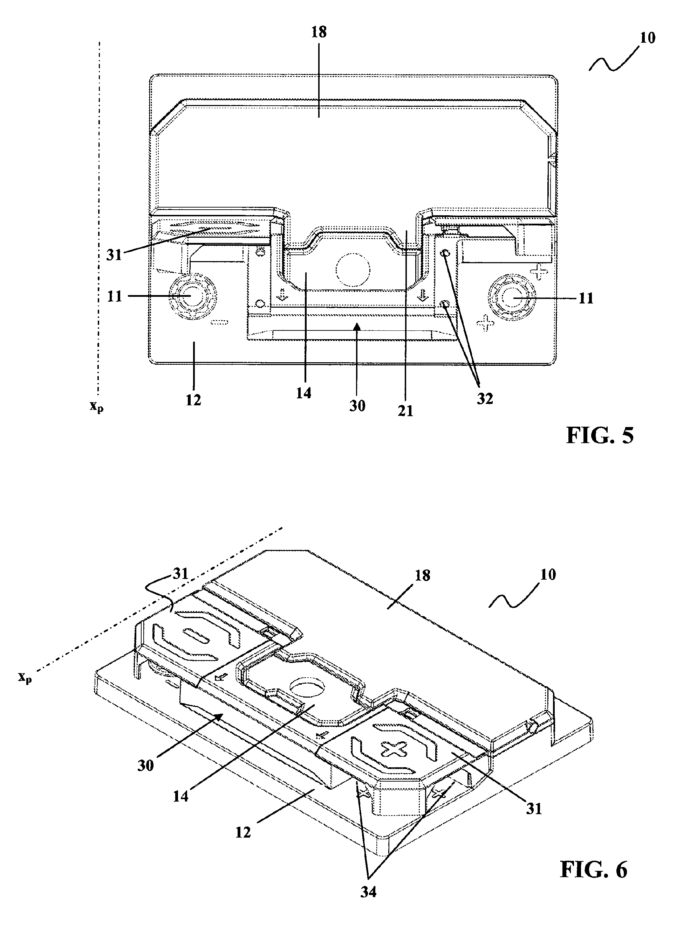

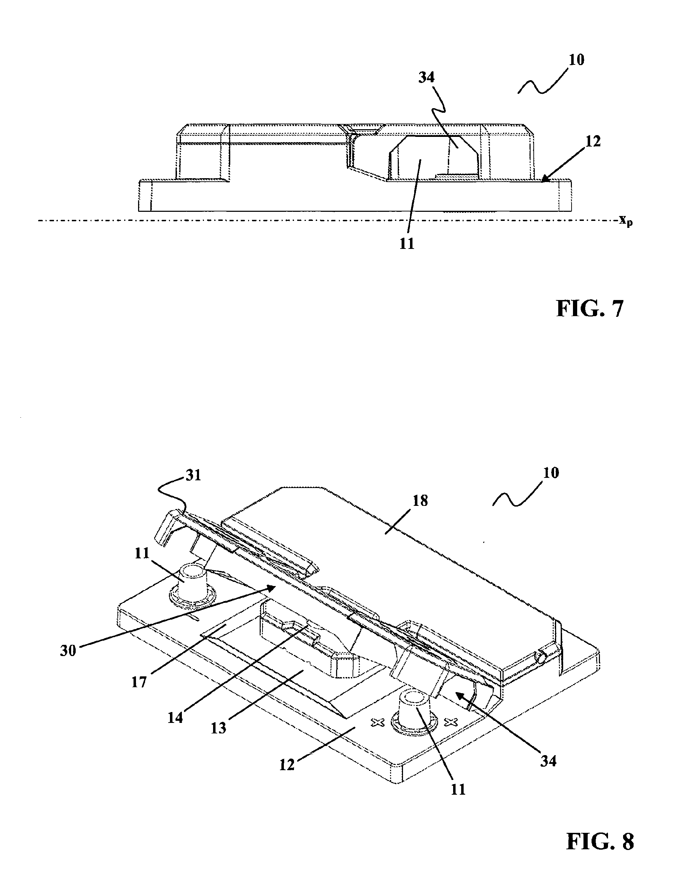

Objects of the present invention are achieved with an accumulator cover assembly (10) complete form of which is shown in Figures 4, 5, 6, 7, 8 and 9. In accordance with the objects mainly mentioned in the relevant parts of the present description, the goal of the present invention is to provide a locking arrangement with a suitable carrier handle which can be activated or deactivated simply by a sliding motion in the direction of the horizontal axis (Xₚ) of the assembly surface (12). The principle structure of the covering assembly (10) according to the invention is explained in detail in the following description with reference to the accompanying illustrative figures.

The accumulator cover assembly (10) of the present invention may comprise conventional features of the prior art such as electrode terminals (11) for supplying electricity to a motor vehicle, a backing part having electrolyte or purified water casing holes (16) and corresponding vent caps (15), and a substantially longitudinal upper cap (18) shielding of said backing part. The cover assembly (10) of the invention may optionally comprise a lower platform (13) having inclined side surfaces (17) abutting to the planar surface (12) of the assembly (10) and a further upper platform (14) in order to fill the middle region of a U-shaped handle (30) and to obtain a substantially uniform upper surface when the handle (30) is brought into a horizontally resting position.

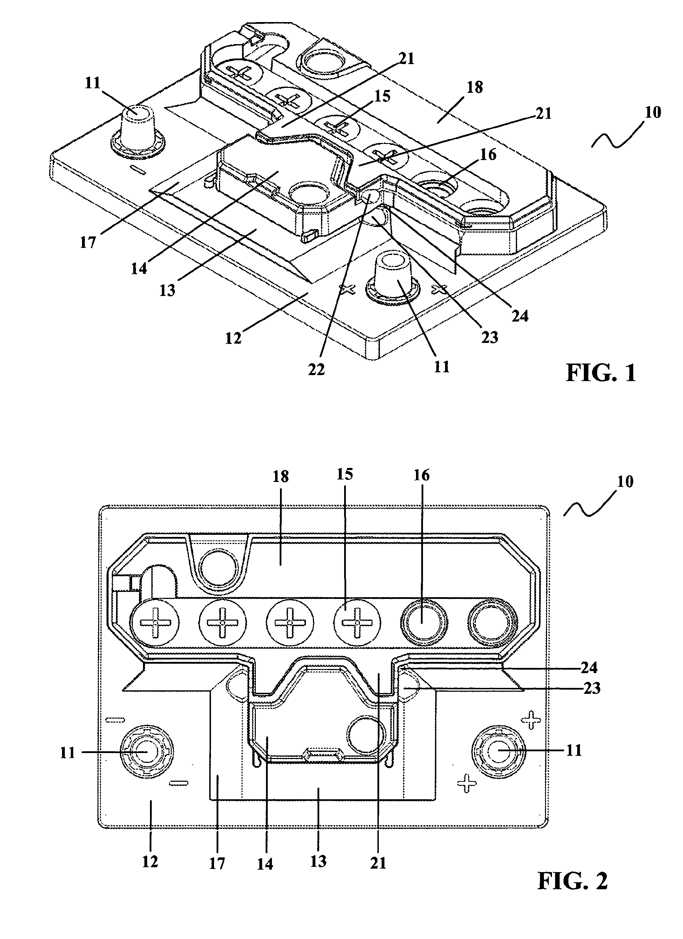

Referring now to Figures 1, 2 and 3, the accumulator cover assembly (10) is provided with forward protrusions (21) protruding parallel to the horizontal axis (xp) of the assembly surface (12) and having a height such that each having a bearing bore (22) on its side wall for receiving the corresponding pivot (35) of the handle (30). The bearing bore (22) may be of any suitable shape having elongated character such as an ellipse or rectangle such that pivots (35) of the handle (30) may move in the direction of the elongation, i.e. parallel to the elongated axis. In a preferred embodiment, the pivot (35) of the handle (30) is formed as a cylindrical protrusion, thus said bearing bore (22) is formed as an elliptic cavity for comfortable rotation of the handle (30) arrangement.

The cover assembly (10) of the present invention is further provided with a depression area (23) preferably in the form of a concave cavity on a suitable position of the lower platform (13). This depression is advantageously located right under the above referenced bearing bore (22) so that the pivotal handle (30), when pulled forward and swung into an upright position, may comfortably be rotated without hindrance of the platform surface (13 and/or 17). In other words, without such a depression area (23), the corners (36) of the handle (30) might simply wedge on the surface of the platform (13). From the above explanations, it is immediately apparent that the depression area (23) as referred above need not be formed on a platform (13) surface, but may also be arranged on the main planar surface (12) of the cover assembly (10) when said platform (13) is absent. The sizes of the corners (36) are arranged to achieve the above objectives.

Further to the above features, the cover assembly (10) of the present invention also comprises locking corners (24) provided at the ends of the each depression area (23) so that the handle (30) may have a self locking character when pushed in place in the horizontal resting position as shown in Figures 3, 5, 6 and 7. At this time, the user pushes the handle (30) backwardly in the horizontal axis (Xₚ) so that the corners (36) of the handle (30) would move along the depression area (23) and be squeezed at the locking corners (24). The carrier handle (30) thereby becomes locked in the resting position and external effects of the vehicle do not cause any vibration.

In order to re-activate the handle (30) by rotating the same into an upright position as shown in Figures 4, 8 and 9, the user is ought to retract the handle (30) in the horizontal axis (Xₚ) until the handle corners (36) would be freed from the locking corners (24) and fall into the depression area (23) for free rotation. It is therefore a preferred form of the bearing bore (22) to have an inclination with respect to the horizontal axis (Xₚ)so that the pivots (35) of the handle (30) may move upwardly when the user retracts the handle (30) for rotation. The inclination is provided with an acute angle with respect to said axis (Xₚ).It is to be noticed that upward movement of the pivots (35) causes upward movement of the entire handle (30), thereby handle corners (36) become more relieved for rotation without touching any surface of the cover assembly (10). On the contrary, this slope of the bearing bore (22) is advantageous also for the case that the user intends to bring the handle (30) structure into the locked position by pushing the same in the horizontal axis (Xₚ) because of the fact that the pivots (35), as the handle (30) proceeds, forced into the locking corner (24) to achieve self locking of the assembly.

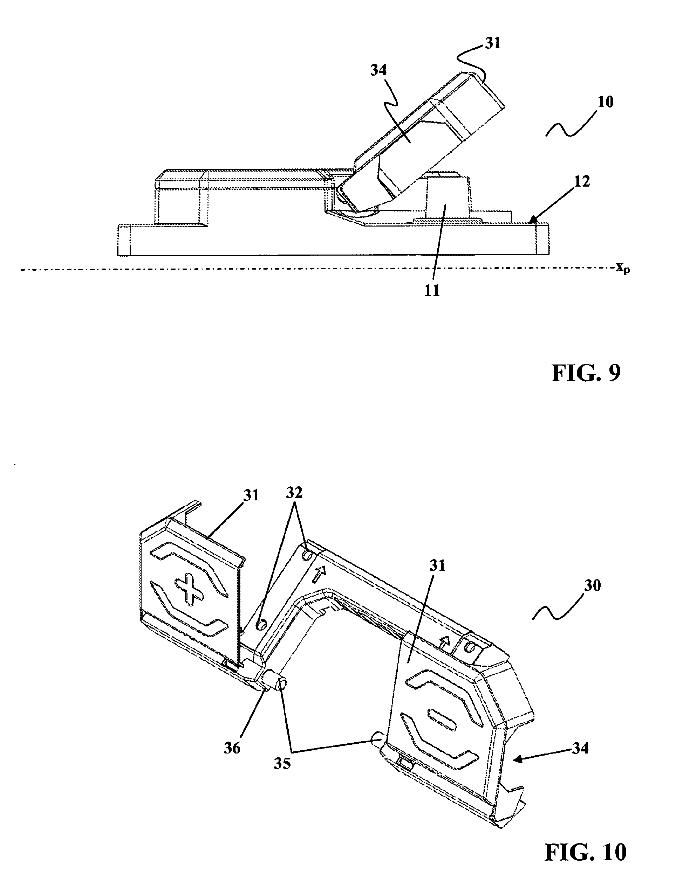

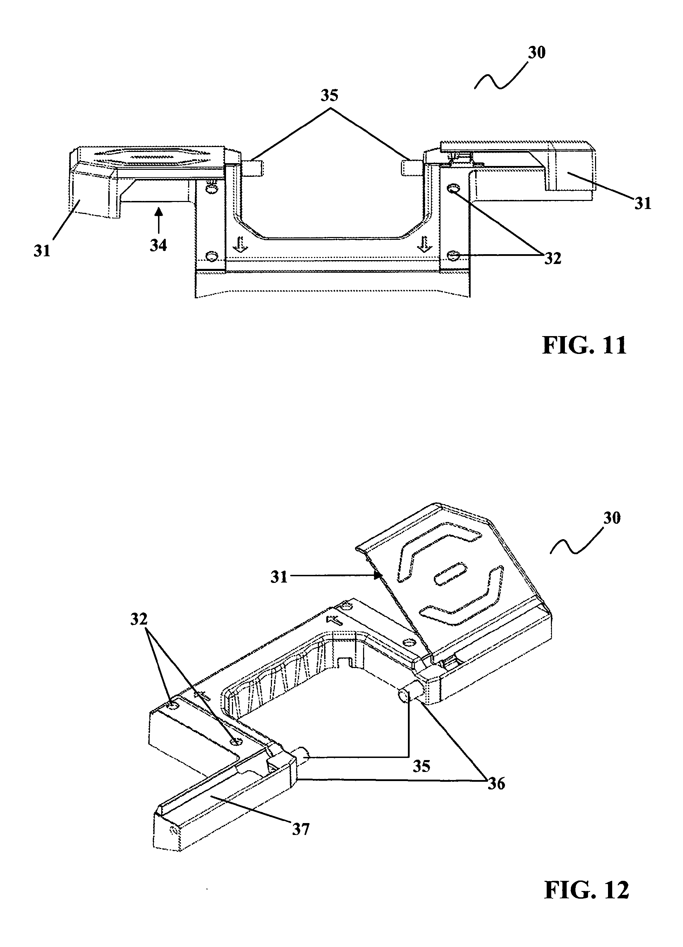

In another aspect of the present invention, a special handle arrangement as shown in greater detail with Figures 10, 11 and 12, is provided for better alignment with the cover assembly (10) of the present invention. According to said preferred embodiment, the handle (30) is arranged to have a U shaped body having perpendicular extensions (37) in opposite directions at its ends so that the terminal lids (31) would be rotatably hinged on said extensions (37). Preferably each terminal lid (31) bears a number of tongues (38) and the handle (30) body is provided with a number of corresponding slots (32) for fixating the terminal lids (31) in closed position. It is surely apparent from the figures that this arrangement enables the user to reach to the accumulator terminals (11) without detaching or rotating the entire carrier handle (30). In other words, the terminal lids (31) are independent from the handle (30) as regards rotation into a vertical position when the handle (30) lies on its resting position. However, it is also to be noted that this arrangement is not essential and said terminal lids (31) may be integrally formed with the handle (30) without the above features. The terminal lids (31) may advantageously contain front and side openings (34) so as to allow through passage of the electricity cables without subsequent need of opening or removing the lids (31).

The pivots (35) of the handle (30) are preferable provided with inwardly extending arrangement as shown in the Figures. This arrangement is advantageous as it minimizes the stretching and bending of the handle (30) especially in heavy load accumulator batteries. However, one will appreciate that objects of the present invention may still be achieved when said pivots (35) are arranged in the end portions of the above referenced extensions (37) or in any other place of the carrier handle (30).

In another aspect of the present invention, there is provided a method for producing the cover assembly of the present invention comprising: forming of a number of forward protrusions (21) on the assembly surface (12) protruding parallel to the horizontal axis (Xₚ) of said surface (12) and having a height to form side walls; a number of elongated bearing bores (22) on the side walls of the protrusions (21) that are adapted to receive a corresponding pivot (35) of the handle (30) such that pivots (35) of the handle (30) may move in the direction of said elongation; a number of depression areas (23) each of which is located below the bearing bores (22); and a number of locking corners (24), each being at an above level of the depression areas (23). In a further preferred embodiment, the forward protrusions (21), the longitudinal bearing bores (22) and also the depression areas (23) below said bearing bores (22) are integrally formed by the conventional methods such as injection moulding.

According to a further aspect of the present invention, there is provided an accumulator comprising the aforementioned cover assembly (10) of the present invention. In a further aspect, a method for producing such an accumulator comprising adapting and coupling the accumulator cover assembly (10) of the present invention to an accumulator casing of conventional type (not shown).

## Claims

1. An accumulator cover assembly (10) adapted to operate with a handle (30) having pivots (35) for rotational and pivotal movement, the assembly (10) comprising an assembly surface (12) and a number of electrode terminals (11) **characterized in that** the assembly (10) further comprises:
a number of forward protrusions (21) on said assembly surface (12) protruding parallel to the horizontal axis (xₚ) of the surface (12) and having a height with respect to said surface (12) in order to form side walls,
a number of elongated bearing bores (22) on the side walls of the protrusions (21) that are adapted to receive a corresponding pivot (35) of the handle (30) such that pivots (35) of the handle (30) may move in the direction of said elongation,
a number of depression areas (23) each of which is located below the bearing bores (22), and
a number of locking corners (24), each being at an above level of the depression areas (23),
wherein the depression areas (23) are arranged to allow free rotation of the handle (30) when the handle (30) is retracted away from the locking corners (24) along horizontal axis (xₚ) of the assembly surface (12), whereas the locking corners (24) being adapted to constrain and lock a corner (36) of the handle (30) when said handle (30) is pushed through the locking corners (24) in said horizontal axis (xₚ).

2. An accumulator cover assembly (10) according to claim 1, wherein the elongated bearing bores (22) are substantially of an elliptic shape.

3. An accumulator cover assembly (10) according to claim 1, wherein the elongated bearing bores (22) are having an acute angled inclination with respect to the horizontal axis (xₚ) of the assembly surface (12) such that the handle (30) may simultaneously move in the horizontal and vertical axis when retracted away from the locking position.

4. An accumulator cover assembly (10) according to claim 1, wherein the assembly (10) further comprises a lower platform (13) on which said depression areas (23) are located.

5. An accumulator cover assembly (10) according to claim 1 or 4, wherein the depression areas (23) comprise concave cavities.

6. An accumulator cover assembly (10) according to claim 1, wherein the assembly (10) further comprises a carrier handle (30) having pivots (35) corresponding to the bearing bores (22), and corners (36) having a size arranged to be constrained in a locking position at the locking corners (24).

7. An accumulator cover assembly (10) according to claim 6, wherein said pivots (35) are of a cylindrical shape.

8. An accumulator cover assembly (10) according to claim 6, wherein the handle (30) further comprises at least one terminal lid (31).

9. An accumulator cover assembly (10) according to claim 8, wherein the terminal lid (31) is hinged upon the handle (30) to allow pivotal rotation.

10. An accumulator cover assembly (10) according to claim 8, wherein the terminal lid (31) comprises a number of tongues (38) and the handle (30) comprises a number of slots (32) corresponding to said tongues (38).

11. An accumulator cover assembly (10) according to claim 8, wherein the terminal lid (31) further comprises a number of openings (34) to allow through passage of the electricity cables.

12. An accumulator comprising a cover assembly (10) according to any of the preceding claims.

13. A method for producing an accumulator cover assembly (10) having an assembly surface (12) adapted to operate with a handle (30) having pivots (35) for rotational and pivotal movement, the method comprising forming of a number of forward protrusions (21) on said assembly surface (12) protruding paraiiei to the horizontal axis (xₚ) of the surface (12) and having a height to form side walls; a number of elongated bearing bores (22) on the side walls of the protrusions (21) that are adapted to receive a corresponding pivot (35) of the handle (30) such that pivots (35) of the handle (30) may move in the direction of said elongation; a number of depression areas (23) each of which is located below the bearing bores (22); and a number of locking corners (24), each being at an above level of the depression areas (23).

14. A method according to claim 13, wherein said protrusions (21), elongated bearing bores (22) and depression areas (23) are integrally formed on the assembly surface (12) by way of injection moulding.

15. A method for producing an accumulator comprising adapting and coupling an accumulator cover assembly (10) according to claim 1 to an accumulator casing.

## Patentansprüche

1. Akkumulatordeckelaufbau (10), der dafür eingerichtet ist, mit einem Griff (30), welcher Zapfen (35) für eine Dreh- und Schwenkbewegung aufweist, zusammenzuwirken, wobei der Aufbau (10) eine Aufbauoberfläche (12) und eine Anzahl von Elektrodenanschlüssen (11) umfasst, **dadurch gekennzeichnet, dass** der Aufbau (10) weiterhin Folgendes umfasst:
eine Anzahl von nach vorne gerichteten Vorsprüngen (21) auf der Aufbauoberfläche (12), welche parallel zu der horizontalen Achse (xₚ) der Oberfläche (12) hervorstehen und eine Höhe gegenüber der Oberfläche (12) besitzen, um Seitenwände zu bilden,
eine Anzahl von länglichen Lagerbohrungen (22) an den Seitenwänden der Vorsprünge (21), die dafür eingerichtet sind, einen entsprechenden Zapfen (35) des Griffs (30) aufzunehmen, so dass sich Zapfen (35) des Griffs (30) in der Richtung der Längserstreckung bewegen können,
eine Anzahl von Vertiefungsbereichen (23), von denen jeder unterhalb der Lagerbohrung (22) angeordnet ist, und
eine Anzahl von Verriegelungswinkeln (24), die sich jeweils oberhalb der Vertiefungsbereiche (23) befinden,
wobei die Vertiefungsbereiche (23) so eingerichtet sind, dass sie eine freie Drehung des Griffs (30) ermöglichen, wenn der Griff (30) von den Verriegelungswinkeln (24) entlang der horizontalen Achse (xₚ) der Aufbauoberfläche (12) abgezogen ist, während die Verriegelungswinkel (24) dafür eingerichtet sind, einen Winkel (36) des Griffs (30) zu hemmen und zu verriegeln, wenn der Griff (30) durch die Verriegelungswinkel (24) in die horizontalen Achse gedrückt ist.

2. Akkumulatordeckelaufbau (10) nach Anspruch 1, wobei die länglichen Lagerbohrungen (22) im Wesentlichen eine elliptische Form aufweisen.

3. Akkumulatordeckelaufbau (10) nach Anspruch 1, wobei die länglichen Lagerbohrungen (22) eine spitzwinklige Neigung gegenüber der horizontalen Achse (xₚ) der Aufbauoberfläche (12) aufweisen, so dass sich der Griff (30) gleichzeitig in der horizontalen und vertikalen Achse bewegen kann, wenn er aus der Verriegelungsposition zurückgezogen wird.

4. Akkumulatordeckelaufbau (10) nach Anspruch 1, wobei der Aufbau (10) weiterhin eine untere Ebene (13) aufweist, auf der die Vertiefungsbereiche (23) angeordnet sind.

5. Akkumulatordeckelaufbau (10) nach einem der Ansprüche 1 oder 4, wobei die Vertiefungsbereiche (23) konkave Vertiefungen umfassen.

6. Akkumulatordeckelaufbau (10) nach Anspruch 1, wobei der Aufbau (10) weiterhin einen Tragegriff (30) mit Zapfen (35) entsprechend der Lagerbohrungen (22) aufweist und Winkel (36) eine Größe aufweisen, die dafür eingerichtet ist, um in einer Verriegelungsposition an den Verriegelungswinkeln (24) gehemmt zu werden.

7. Akkumulatordeckelaufbau (10) nach Anspruch 6, wobei die Zapfen (35) eine zylindrische Form besitzen.

8. Akkumulatordeckelaufbau (10) nach Anspruch 6, wobei der Griff (30) ferner wenigstens eine Anschlusskappe (31) aufweist.

9. Akkumulatordeckelaufbau (10) nach Anspruch 8, wobei die Anschlusskappe (31) auf dem Griff (30) abklappbar ist, um eine Schwenkdrehung zu ermöglichen.

10. Akkumulatordeckelaufbau (10) nach Anspruch 8, wobei die Anschlusskappe (31) eine Anzahl von Zungen (38) umfasst und der Griff (30) eine Anzahl von Schlitzen (32) entsprechend der Zungen (38) umfasst.

11. Akkumulatordeckelaufbau (10) nach Anspruch 8, wobei die Anschlusskappe (31) ferner eine Anzahl von Öffnungen (34) aufweist, um ein Durchführen der elektrischen Kabel zu ermöglichen.

12. Akkumulator, welcher einen Deckelaufbau (10) gemäß einem der vorhergehenden Ansprüche umfasst.

13. Verfahren zum Herstellen eines Akkumulatordeckelaufbaus (10) mit einer Aufbauoberfläche (12), die dafür eingerichtet ist, mit einem Griff (30), welcher Zapfen (35) für eine Dreh- und Schwenkbewegung aufweist, zusammenzuwirken, wobei das Verfahren ein Bilden von einer Anzahl von nach vorne gerichteten Vorsprüngen (21) auf der Aufbauoberfläche (12), welche parallel zu der horizontalen Achse (xₚ) der Oberfläche (12) hervorstehen und eine Höhe aufweisen, um Seitenwände zu bilden; einer Anzahl von länglichen Lagerbohrungen (22) an den Seitenwänden der Vorsprünge (21), die dafür eingerichtet sind, einen entsprechenden Zapfen (35) des Griffs (30) so aufzunehmen, dass Zapfen (35) des Griffs (30) sich in Richtung der Längserstreckung bewegen können; einer Anzahl von Vertiefungsbereichen (23), die sich jeweils unterhalb der Lagerbohrungen (22) befinden; und einer Anzahl von Verriegelungswinkeln (24), die sich oberhalb der Vertiefungsbereiche (23) befinden, umfasst.

14. Verfahren nach Anspruch 13, wobei die Vorsprünge (21), die länglichen Lagerbohrungen (22) und die Vertiefungsbereiche (23) auf der Aufbauoberfläche (12) mittels eines Spritzgusses integral gebildet werden.

15. Verfahren zum Herstellen eines Akkumulators, welches ein Einrichten und Verbinden eines Akkumulatordeckelaufbaus (10) nach Anspruch 1 mit einem Akkumulatorgehäuse umfasst.

## Revendications

1. Assemblage de couvercle d'accumulateur (10) adapté pour fonctionner avec une poignée (30) ayant des pivots (35) pour un mouvement de rotation et de pivotement, l'assemblage (10) comprenant une surface d'assemblage (12) et un certain nombre de bornes d'électrodes (11), **caractérisé en ce que** l'assemblage (10) comprend en outre :
un certain nombre de saillies avant (21) sur ladite surface d'assemblage (12) faisant saillie parallèlement à l'axe horizontal (Xₚ) de la surface (12) et ayant une hauteur par rapport à ladite surface (12) afin de former des parois latérales,
un certain nombre d'alésages de palier allongés (22) sur les parois latérales des saillies (21) qui sont adaptés pour recevoir un pivot correspondant (35) de la poignée (30) de telle sorte que les pivots (35) de la poignée (30) peuvent se déplacer dans la direction dudit allongement,
un certain nombre de zones de dépression (23) chacune étant située au-dessous des alésages de palier (22), et
un certain nombre de coins de verrouillage (24), chacun étant situé à un niveau au-dessus des zones de dépression (23),
dans lequel les zones de dépression (23) sont agencées pour permettre la rotation libre de la poignée (30) lorsque la poignée (30) est rétractée à distance des coins de verrouillage (24) le long de l'axe horizontal (Xₚ) de la surface d'assemblage (12), alors que les coins de verrouillage (24) sont adaptés pour contraindre et verrouiller un coin (36) de la poignée (30) lorsque ladite poignée (30) est poussée à travers les coins de verrouillage (24) dans ledit axe horizontal (Xₚ).

2. Assemblage de couvercle d'accumulateur (10) selon la revendication 1, dans lequel les alésages de palier allongés (22) sont sensiblement de forme elliptique.

3. Assemblage de couvercle d'accumulateur (10) selon la revendication 1, dans lequel les alésages de palier allongés (22) ont une inclinaison à angle aigu par rapport à l'axe horizontal (Xₚ) de la surface d'assemblage (12) de telle sorte que la poignée (30) peut se déplacer simultanément dans l'axe horizontal et vertical en position rétractée éloignée de la position de verrouillage.

4. Assemblage de couvercle d'accumulateur (10) selon la revendication 1, dans lequel l'assemblage (10) comprend en outre une plate-forme inférieure (13) sur lequel lesdites zones de dépression (23) sont situées.

5. Assemblage de couvercle d'accumulateur (10) selon la revendication 1 ou 4, dans lequel les zones de dépression (23) comprennent des cavités concaves.

6. Assemblage de couvercle d'accumulateur (10) selon la revendication 1, dans lequel l'assemblage (10) comprend en outre une poignée de support (30) ayant des pivots (35) correspondant aux alésages de palier (22), et des coins (36) ayant une taille prévue pour être contrainte dans une position de verrouillage au niveau des coins de verrouillage (24).

7. Assemblage de couvercle d'accumulateur (10) selon la revendication 6, dans lequel lesdits pivots (35) sont de forme cylindrique.

8. Assemblage de couvercle d'accumulateur (10) selon la revendication 6, dans lequel la poignée (30) comprend en outre au moins un couvercle de borne (31).

9. Assemblage de couvercle d'accumulateur (10) selon la revendication 8, dans lequel le couvercle de borne (31) est articulé sur la poignée (30) pour permettre la rotation de pivotement.

10. Assemblage de couvercle d'accumulateur (10) selon la revendication 8, dans lequel le couvercle de borne (31) comprend un certain nombre de languettes (38) et la poignée (30) comprend un certain nombre de fentes (32) correspondant auxdites languettes (38).

11. Assemblage de couvercle d'accumulateur (10) selon la revendication 8, dans lequel le couvercle de borne (31) comprend en outre un certain nombre d'ouvertures (34) pour permettre le passage des câbles électriques.

12. Accumulateur comprenant un assemblage de couvercle (10) selon l'une quelconque des revendications précédentes.

13. Procédé de production d'un assemblage de couvercle d'accumulateur (10) ayant une surface d'assemblage (12) adaptée pour fonctionner avec une poignée (30) ayant des pivots (35) pour un mouvement de rotation et de pivotement, le procédé comprenant la formation d'un certain nombre de saillies avant (21) sur ladite surface de montage (12) faisant saillie parallèlement à l'axe horizontal (Xₚ) de la surface (12) et ayant une hauteur pour former des parois latérales; un certain nombre d'alésages de palier allongés (22) sur les parois latérales des saillies (21) qui sont adaptés pour recevoir un pivot correspondant (35) de la poignée (30) de telle sorte que les pivots (35) de la poignée (30) peuvent se déplacer dans la direction dudit allongement ; un certain nombre de zones de dépression (23) dont chacune est située au-dessous des alésages de palier (22), et un certain nombre de coins de verrouillage (24), chacun étant situé à un niveau au-dessus des zones de dépression (23).

14. Procédé selon la revendication 13, dans lequel lesdites saillies (21), les alésages de palier allongés (22) et les zones de dépression (23) sont intégralement formés sur la surface d'assemblage (12) au moyen d'un moulage par injection.

15. Procédé de production d'un accumulateur comprenant l'adaptation et le couplage d'un assemblage de couvercle d'accumulateur (10) selon la revendication 1 à un boîtier d'accumulateur.
